# EUROPÄISCHE PATENTANMELDUNG

(11) **EP 0 895 370 A2**
(43) Veröffentlichungstag der Anmeldung: **03.02.1999**
(21) Anmeldenummer: 98440160.4
(22) Anmeldetag: 24.07.1998
(51) Int. Cl.: H04J 3/06, H04J 3/07

(54) **Verfahren und Komponente zum Ausgleich von Frequenz- und Phasenschwankungen**

(30) Priorität: 31.07.1997 DE 19732943
(71) Anmelder: Alcatel Alsthom Compagnie Generale d'Electricité, 75088 Paris (FR)
(72) Erfinder: Scheer, David, 71638 Ludwigsburg (DE); Kasper, Jürgen, 70199 Stuttgart (DE)
(74) Vertreter: Rausch, Gabriele, Dr.

(57) **Zusammenfassung**

Es wird ein Verfahren zum Ausgleich von Frequenz- und Phasenschwankungen zwischen einem eingehenden und einem ausgehenden Daten und Datenlücken enthaltenden Signal vorgeschlagen, wobei die Phasendifferenz zwischen Signalrahmen von Eingangs- und Ausgangssignalen von einer Phasenmessung gemessen wird, wobei die Phasenlage der Signalrahmen von der Signalverarbeitungseinheit zur Berechnung der Differenz zwischen eingehenden und ausgehenden Bytes verwendet wird und die Signalverarbeitungseinheit die Differenz der Bytes anhand einer festgelegten Antwortkurve zu einer Entscheidung, ob Stopfdaten eingefügt oder entnommen werden müssen, heranzieht.

## Beschreibung

Die Erfindung geht aus von einem Verfahren zum Ausgleich von Frequenz- und Phasenschwankungen zwischen einem eingehenden und einem ausgehenden Signal nach der Gattung des Hauptanspruchs.

Aus der EP 0 558 136 A1 ist ein Verfahren sowie ein Übertragungssystem mit einer Schaltungsanordnung bekannt, das einen Vorpuffer und eine Steuerschaltung enthält, welche eine Anpassung zweier digitaler Signale mit unterschiedlichen Frequenzen durchführt. In den Vorpuffer werden die Daten des Signals mit der Taktfrequenz eines Schreib-Taktsignals geschrieben. Das Schreib-Taktsignal ist dabei aus den ankommenden Signalen abgeleitet worden. Die Daten werden aus dem Vorpuffer mit der Taktfrequenz eines lokalen Taktsignals oder eines Lese-Taktsignals ausgelesen. Es findet also eine Synchronisation der Daten auf das Lesetaktsignal statt. Gesteuert wird der Schreib- und Lesevorgang des Vorpuffers von einer Steuerschaltung, die bei Erreichen eines bestimmten unteren Füllstandes des Vorpuffers positive Stopfdaten in das abgehende Signal einfügt. Ein positiver Stopfvorgang ist erforderlich, wenn die Frequenz des Lesetaktsignals größer ist als die Frequenz des Schreibtaktsignals. Es kann aber auch der umgekehrte Fall eintreten. In diesem Fall muß, bevor der Vorpuffer überläuft, ein negativer Stopfvorgang stattfinden. Bei einem negativen Stopfvorgang wird an einer Stelle Nutzinformation übertragen, die sonst keine Nutzinformation trägt. Ein negativer Stopfvorgang kann nur während einer Datenlücke vorgenommen werden. Eine solche Schaltungsanordnung kann zur Verarbeitung von STM-1-Signalen, die nach der CCITT-Empfehlung G 709 strukturiert sind, dienen.

Die Verwendung des Vorpuffers führt dazu, daß starke Schwankungen der Stopfdaten und der im STM-1-Signal vorhandenen Pointern hervorgerufen werden. Die Entscheidung, ob ein positiver oder negativer Stopfvorgang vorgenommen wird, wird anhand einer oberen und einer unteren Schwelle entschieden. Dadurch, daß endliche Schwellen über- bzw. unterschritten werden müssen, bevor ein negativer oder positiver Stopfvorgang einsetzt, existiert eine Länge von n Pointern, die ausgesendet werden, bevor eine Änderung im Entscheidungsverhalten festgestellt werden kann. Durch die Gruppierung von Pointern treten im Übertragungssystem Verschiebungen und Jitter auf, die nur sehr schwer zu kompensieren sind.

Der Erfindung liegt die Aufgabe zugrunde, ein Verfahren zum Ausgleich von Frequenz- und Phasenschwankungen zwischen eingehenden und ausgehenden Signalen zu schaffen, das einen Jitter des Signals aufgrund einer endlichen Bufferlänge verhindert.

Das erfindungsgemäße Verfahren mit den kennzeichnenden Merkmalen des Anspruchs 1 hat gegenüber dem Stand der Technik den Vorteil, daß eine Bufferlänge von Null verwendet wird. Dazu wird die Phasenlage der Signalrahmen von einer Signalverarbeitungseinheit zur Berechnung der Differenz zwischen eingehenden und ausgehenden Bytes des Signals verwendet und in der Signalverarbeitungseinheit die Differenz der Bytes anhand einer festgelegten Antwortkurve zu einer Enstscheidung herangezogen. Die Antwortkurve hat ein streng monotones Verhalten. Dadurch erhält man den Vorteil, daß das Verfahren sofort auf Änderungen im Eingangssignal reagieren kann, ohne daß es zu sogenannten "toten Zonen" kommt. Der durch die toten Zonen, die durch die endlichen Bufferlängen hervorgerufen werden, erzeugte Jitter wird dadurch vermieden. Durch das Verfahren ist es auf einfache Weise möglich, eine weiche Anpassung von Eingangs- und Ausgangsdaten zu erhalten, und Bereiche, die lediglich Steuerinformationen und keine Daten enthalten zu überbrücken. Es sind keine Vorhersagen über die erwartete Datenmenge mehr notwendig, da das Verfahren direkt auf die gemessenen Dateneingänge reagieren kann.

Durch die in den Unteranprüchen aufgeführten Maßnahmen ist eine vorteilhafte Weiterbildung und Verbesserung des im Anspruch 1 angegebenen Verfahrens möglich.

Besonders vorteilhaft ist es, daß die Antwortkurve, die aus den Anzahl der Rahmen über der Zahl der abweichenden Bytes besteht, monoton und kontinuierlich verläuft. Dadurch erhält man ein linear geregeltes System, das zudem den Eigenschaften des nachgeschalteten Übertragungssystems angepaßt werden kann. Über die Festlegung der Antwortkurve ist es auf einfache Weise möglich, ein Übertragungssystem, das zum Beispiel monotone Verschiebungen im Systemtakt aufweist anzupassen.

Die Komponente zur Verwendung des Verfahrens mit den kennzeichnenden Merkmalen des unabhängigen Anspruchs hat den Vorteil, daß auf Buffer verzichtet werden kann, da die Entscheidung über einen digitalen Signalprozessor läuft. Es müssen keine Daten zwischengespreichert werden, und auch keine Schwellwerte berechnet werden.

Vorteilhafterweise wird der Digitalprozessor als ASIC aufgebaut und für ein bestimmtes Übertragungssystem speziell spezifiziert.

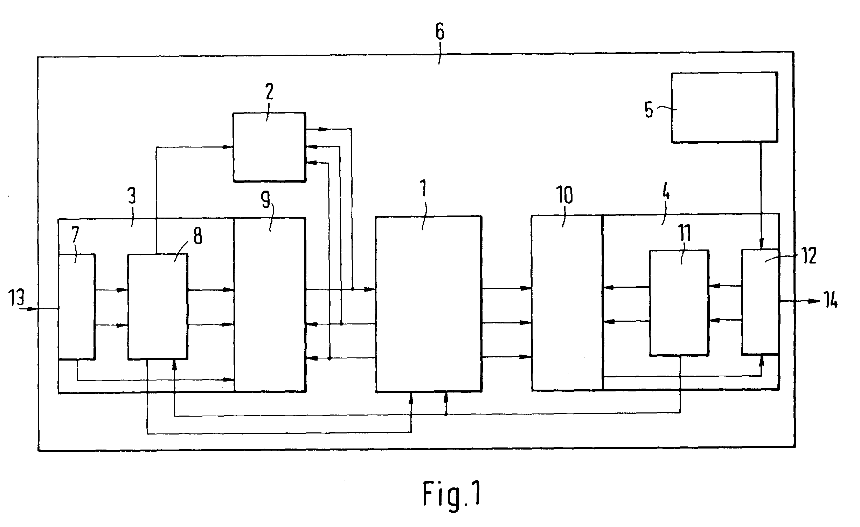

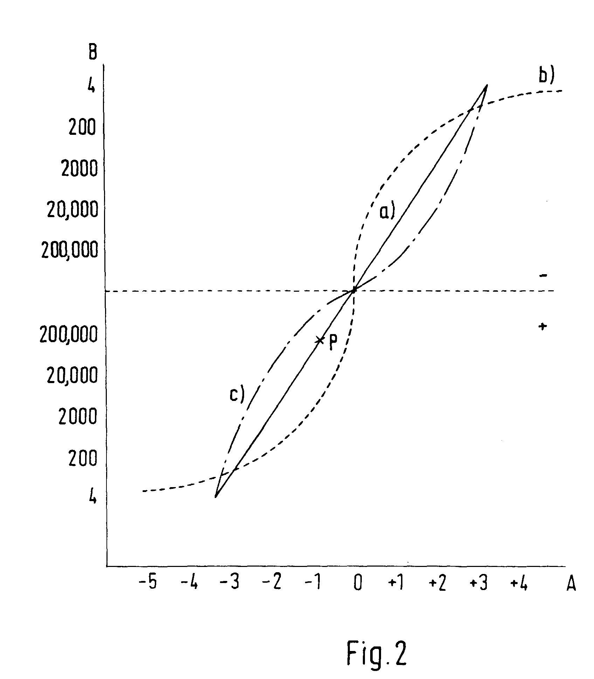

Ein Ausführungsbeispiel der Erfindung ist in den Zeichnungen dargestellt und in der nachfolgenden Beschreibung näher erläutert.
Es zeigt Figur 1 den schematischen Aufbau einer Komponente zum Ausgleich von Frequenz- und Phasenschankungen und Figur 2 Graphen möglicher Antwortkurven.

Figur 1 zeigt das Schema einer Komponente 6 zum Ausgleich von Frequenz- und Phasenschwankungen. Das eingehende Signal 13 gelangt in eine Eingangseinheit 3, die mit einer Signalverarbeitungseinheit 1 in Verbindung steht. Die Signalverarbeitungseinheit 1 ist weiterhin mit der Ausgangseinheit 4 verbunden, die das ausgehende Signal 14 aussendet. Mit der Eingangseinheit 3 und der Signalverarbeitungseinheit 1 ist die Phasenmessung 2 verbunden, während die Systemzeit 5 mit der Ausgangseinheit 4 und über die Ausgangseinheit 4 mit der Signalverarbeitungseinheit 1 in Verbindung steht. Eine solche Komponente 6 dient beispielsweise der Frequenz- und Phasenanpassung von STM-1-Signalen.

Ein STM-1-Signal ist nach der CCITT-Empfehlung G 709 definiert, ist nach Rahmen strukturiert und weist außer den eigentlichen Daten des ankommenden Signals Steuerinformationen und Stopfdaten auf, die als Datenlücken bezeichnet werden. Ein STM-1-Rahmen besteht aus 250 Spalten und 9 Zeilen, wobei eine Zeile 270 Bytes enthält. In den Zeilen 1-9 jeweils in den Spalten 1-9 ist der Section-Overhead (SOH) für Steuerungs- und Fehlererkennungsinformation und in dem restlichen Bereich Payload-Daten des ankommenden Signals untergebracht. Das Signal wird dabei in sogenannten virtuellen Containern VC-4 eingebracht. In der Zeile 4 des STM-1-Signals jeweils in den Spalten 1-9 sind AU-Pointer (Administrative Unit) abgelegt, die auf den Anfang einer Verwaltungseinheit AU-4 oder AU-3 hinweisen und Stopfdaten enthalten können. Die Komponente 6 muß die Pointer des eingehenden Datenstroms 13 lesen und für den ausgehenden Datenstrom 14 neue Pointer, sogenannte GTI (Generic Transport Interface)-Pointer, setzen.

Der Datenstrom mit einer Rate von 155 MHz wird in die Eingangseinheit 3 eingespeist. Im Seriell-Parallel-Konverter 7 werden die eingehenden Daten in einen parallelen Datenstrom gewandelt und die Rahmenworte des Datenrahmens detektiert. Jeder Datenrahmen enthält 2430 Bytes, die im Dual-Port RAM 9 abgelegt werden, wobei mit dem Rahmenwort bei der Position 0000 begonnen und bei der Position 2429 aufgehört wird. Wenn eines der zirkularen Register gefüllt ist, steht ein weiteres für die hereinkommenden Daten zur Verfügung. Die Adressen der Daten werden von einem frei programmierbaren Baustein 8 festgelegt, der zusätzlich ein Interrupt-Signal erzeugt, wenn die Datenrahmen des einkommenden Signals 13 detektiert wurden. Die Eingangseinheit 3 wird vom Zeittakt des Eingangssignals 13 getaktet und besitzt keinen Bezug zu der Systemzeit 5 der Komponente 6. Zur Phasenmessung zwischen Eingangssignal 13 und von der Signalverarbeitungseinheit 1 erzeugten Ausgangssignal dient die Phasenmessung 2. Die Phasenmessung arbeitet mit einem Interrupt-Signal, das vom frei programmierbaren Baustein der Ausgangseinheit 4 erzeugt und an die Phasenmessung weitergegeben wird. Der frei programmierbare Baustein 11 arbeitet mit der internen Systemzeit und besitzt eine Verzögerungsschaltung, die den Takt um jede beliebige Anzahl von Bytes bezüglich des Rahmenpulses der Systemzeit verschieben kann. Für unser erfindungsgemäßes Verfahren wird diese Verzögerungszeit auf 0 gesetzt. Das Interrupt-Signal des frei programmierbaren Bausteins 11 gelangt zum frei programmierbaren Baustein 8 der Eingangseinheit genau zu dem Zeitpunkt, an dem die Signalverarbeitungseinheit den neuen Rahmenpuls erzeugt. Anschließend stellt die Phasenmessung die Position des Pointers im Eingangssignal 13 zur Zeit des Ausgangsrahmenpulses fest. Was man damit erreicht, ist eine Phasenmessung des eingehenden Signals bezüglich des Rahmens des ausgehenden Signals, gemessen in Einheiten von eingehenden Bytes. Diese Phasenmessung kann auch mit der 155 MHz-Uhr vorgenommen werden, anstatt die Zeitsignale des eingehenden Signals zu verwenden. Dadurch wird die Messung deutlich verbessert. Die Ausgangseinheit 4 weist diesselbe Struktur wie die Eingangseinheit 3 auf. Die Daten werden von einem Dual-Port RAM 10 gelesen und über eine frei programmierbaren Baustein 11 und einen Parallel-Seriell-Wandler 12 auf den Ausgang gegeben. Der Ausgang kann ein Anschluß an eine Schaltmatrix oder auch ein Anschluß an eine Übertragungsstrecke zu einem Koppelpunkt sein. Der in der Signalverarbeitungseinheit 1 erzeugte neue Pointer ist der GTI (Generic Transport Interface)-Pointer, der mit dem ausgehenden Datenstrom 14 die Komponente verläßt.

Als Signalverarbeitungseinheit kann ein digitaler Signalprozessor verwendet werden, der Daten zunächst in einen internen Speicher einlesen muß, bevor sie verarbeitet werden können. Dieser Vorgang wird von einer internen Chip, der als Transfer Controller eingesetzt wird, vorgenommen. Sehr effektiv arbeitet ein digitaler Signalprozessor, wenn er große Mengen an Daten komplett verarbeitet. Es ist auf diese Weise möglich, einen kompletten SDH-Rahmen in den Prozessor einzulesen und zu verarbeiten. Der im Signalprozessor erzeugte GTI-Pointer erlaubt es, die Anzahl an Datenbytes in einem Datenrahmen zwischen drei möglichen Werten (2352, 2349, 2346) zu wählen, wenn es sich um VC-4-Container handelt. Wenn die Datenrate des Eingangssignals sich bezüglich der Zeitsignale des Eingangssignals ändert und bezüglich der eingehenden Pointer, muß der GTI-Pointer angepaßt werden, so daß alle eingehenden Daten in den ausgehenden Datenrahmen übernommen werden.

Figur 2 zeigt die graphische Darstellung der Antwortkurve, wobei die Achse A die Anzahl der Bytes darstellt, die die beiden Pointer (Eingangs- und Ausgangsdatenstrom) aus der Phase sind. Die B-Achse stellt die Anzahl an Daten rahmen dar, die abgewartet werden, bevor eine Entscheidung für das negative oder positive Stopfen fällt. Die Gerade stellt eine Antwortkurve dar, wie sie in einem Übertragungssystem verwendet wird, bei dem Probleme mit Systemzeiten nicht auftreten. Kurve B findet im Übertragungssystemen Einsatz, bei denen monotone und kontinuierliche Verschiebungen der Systemzeit zu beobachten und zu korrigieren sind. Kurve C kann verwendet werden für Übertragungssysteme, bei denen Phasenschwankungen statistisch verteilt sind. Betrachtet man den Punkt P, kann man aus der Kurve ableiten, daß bei einer Verschiebung der Phase um 1 Byte 200.000 Zyklen abgewartet wird, bis eine Entscheidung für einen positiven Stopfvorgang getroffen wird. Andererseits wird bei einer Phasenablage von 3 Bytes bereits nach ca. 50 - 100 Zyklen nachgeregelt.

## Patentansprüche

1. Verfahren zum Ausgleich von Frequenz- und Phasenschwankungen zwischen einem eingehenden und einem ausgehenden Daten und Daten lücken enthaltenden Signal, wobei die Phasendifferenz zwischen Signalrahmen von Eingangs- und Ausgangssignalen von einer Phasenmessung (2) gemessen und an eine Signalverarbeitungseinheit (1) weitergegeben wird, dadurch gekennzeichnet, daß
- die Phasenlage der Signalrahmen von der Signalverarbeitungseinheit (1) zur Berechnung der Differenz zwischen eingehenden und ausgehenden Bytes verwendet wird und
- die Signalverarbeitungseinheit (1) die Differenz der Bytes anhand einer festgelegten Antwortkurve zu einer Entscheidung, ob Stopfdaten eingefügt oder entnommen werden müssen, heranzieht.

2. Verfahren nach Anspruch 1, dadurch gekennzeichnet, daß die Antwortkurve monoton und kontinuierlich ist.

3. Verfahren nach Anspruch 1 oder 2, dadurch gekennzeichnet, daß die Antwortkurve an das Übertragungsverhalten eines Übertragungssystems anpaßbar ist.

4. Verfahren nach Anspruch 1 bis 3, dadurch gekennzeichnet, daß die Antwortkurve linear oder nichtlinear ist.

5. Verfahren nach Anspruch 1 bis 4, dadurch gekennzeichnet, daß Entscheidung, Stopfdaten einzufügen oder zu entfernen, nach einervon der Antwortkurve gegebenen Zeitverzögerung erfolgt.

6. Komponente zur Verwendung des Verfahrens nach einem der vorhergehenden Ansprüchen für ein synchrones Übertragungsverfahrens mit einer Eingangseinheit (1) und einer Ausgangseinheit (4) und einer damit verbundenen Signalverarbeitungseinheit (1), wobei einen Systemzeit von einer internen Uhr (5) vorgegeben wird, dadurch gekennzeichnet, daß die Signalverarbeitungseinheit (1) aus einem digitalen Signalprozessor besteht, der mit einer Phasenmeßeinheit (2) verbunden ist.

7. Komponente nach Anspruch 6, dadurch gekennzeichnet, daß die Signalverarbeitungseinheit als ASIC aufgebaut ist.
